# EUROPEAN PATENT SPECIFICATION

(11) **EP 1 981 246 B1**
(45) Date of publication and mention of the grant of the patent: **11.05.2011**
(21) Application number: 07702292.9
(22) Date of filing: 07.02.2007
(51) Int. Cl.: H04L 29/08

(54) **A METHOD, APPARATUS AND SYSTEM FOR CHECKING THE VALIDITY FOR GLOBALLY ROUTABLE USER AGENT URI**
VERFAHREN, VORRICHTUNG UND SYSTEM ZUR ÜBERPRÜFUNG DER GÜLTIGKEIT FÜR GLOBAL STEUERBARE BENUTZERAGENT URI
PROCÉDÉ, APPAREIL ET SYSTÈME DE VÉRIFICATION DE LA VALIDITÉ POUR SYSTÈME URI D'AGENT UTILISATEUR GLOBALEMENT ROUTABLE

(30) Priority: 07.02.2006 CN 200610054621
(43) Date of publication of application: 15.10.2008
(73) Proprietor: Huawei Technologies Co., Ltd., Longgang District, Shenzhen Guangdong 518129 (CN)
(72) Inventor: ZHU, Fenqin, Shenzhen Guangdong 518129 (CN)
(74) Representative: Thun, Clemens
(86) International application number: PCT/CN2007/000410
(87) International publication number: WO 2007/090348

(56) References cited:
- US-A1- 2004 153 667
- US-A1- 2006 018 272
- 3GPP: "3RD GENERATION PARTNERSHIP PROJECT TECHNICAL SPECIFICATION GROUP SERVICES AND SYSTEM ASPECTS IP MULTIMEDIA SUBSYSTEM (IMS) STAGE 2 (RELEASE 7)" 3GPP TS 23.228 V7.2.0, [Online] 31 December 2005 (2005-12-31), XP002545135 france Retrieved from the Internet: URL:http://www.3gpp.org/ftp/Specs/archive/ 23_series/23.228/> [retrieved on 2009-09-10]
- MOTOROLA: "IMS impacts of GRUU" 3GPP DRAFT; S2-052755_GRUU_IMSIMPACTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Yokosuka; 20051101, 1 November 2005 (2005-11-01), XP050254101 [retrieved on 2005-11-01]
- draft-ietf-sip-gruu-06; Obtaining and Using Globally Routable User Agent (UA) URIs (GRUU) in the Session Initiation Protocol (SIP) 20 Oct. 2005 page 6, 9-10, 17
- draft-ietf-sipping-gruu-reg-event-00: Reg Event Package Extension for GRUUs 30.9 Chapter [0017], Abstract

## Description

### Field of the Technology

The present invention relates to a technique of processing globally-routable user agent uniform resource identifier (GRUU) in an IP multimedia subsystem (IMS), in particular, to a method, an apparatus, and a system for validating a GRUU in an IMS.

### Background

Along with the development of broadband networks, the mobile communication is not limited to conventional voice communications any more, but may be combined with multimedia services including audio, video, pictures, and texts. The multimedia services are combined with various data services including service presence, short message service, WEB browsing, location information, push services, and file sharing, so as to satisfy users' various demands.

With the development of various data service applications, standard organizations such as 3GPP and 3GPP2 have sequentially put forward an IMS architecture, which aims at realizing various multimedia service applications through using a standardized open structure in the mobile network, so as to offer more choices to the users and enable the users to become more enjoyable.

At the stage of Release 5 (R5) of the 3GPP specification, an IMS is introduced to overlay on a packet-switched (PS) network, and is constituted by function entities of a call session control function (CSCF), a media gateway control function (MGCF), a media resource function (MRF), an interconnect border control function (IBCF), and a home subscriber server (HSS). The CSCF further includes three logic entities: serving CSCF (S-CSCF), proxy CSCF (P-CSCF), and inquiry CSCF (I-CSCF). The S-CSCF is a service switching center of the IMS, which is responsible for session control, maintaining a session status, managing user information, and generating accounting information. The P-CSCF is a point for the user to access the IMS to accomplish user registration, and is responsible for service quality (QoS) control and security management. The I-CSCF is responsible for interworking between the IMS domains, managing assignment and selection of the S-CSCF, hiding network topology and configuration to the exterior, and generating accounting data. The MGCF controls the gateway, and realizes the interworking between the IMS and other networks. The MRF provides media resources. The HSS stores subscription data and configuration information of the user.

The IMS network defined by the 3GPP may also be applied to packet-switched (PS) networks defined in the 3GPP2, so as to provide the interworking with various types of networks, and realize type-independence of terminals. Herein, the IMS is not limited to be applied on 3GPP relevant networks and applications, but other services and applications of access networks and bearer networks may also be realized by the IMS architecture.

The IMS includes two types of users. One is user equipment (UE), which is a normal user and services of the UE are provided by the S-CSCF; the other is a public service identity (PSI) user, which is a special user and services of the PSI user are public services identified on the AS. Moreover, the network entity on the IMS, such as AS, MGCF, or IBCF may also act as a user agent (UA) or a back to back user agent (B2BUA), so as to represent the user to originate a call.

In the IMS, for both the UE and the PSI user, the same public user identity may be registered by more than one user, so that the acquisition of addresses of more than one user and the process of routing to the users both rely on the same public user identity registered by the users. When more than one user share one public user identity, and the IMS network side sends a message with the public user identity, the message needs to be copied and distributed to the users having the same public user identity or sequentially distributed to the users having the same public user identity according to priority set when the user registers the public user identity. However, in various IMS applications, when more than one user registers one public user identity, the users having the same public user identity need to be distinguished, so that the message can be sent to a specific user having the public user identity. The process of distinguishing the different users having the same public user identity can be realized by a GRUU technique.

The process of distinguishing the users having the same public user identity by using the GRUU technique includes the following steps. The IMS network side sets different GRUUs for the different users having the same public user identity. The public user identity may be included in different GRUUs set for the different users having the same public user identity according to preset rules.

When a calling party calls a called party, a GRUU of the called party is carried, the IMS network side determines the public user identity of the called party according to the GRUU of the called party, and then routes the call to the called party according to the determined public user identity and the GRUU of the called party. Likewise, when the calling party originates a call, a GRUU of the calling party is carried, and then the IMS network side determines the public user identity of the calling party according to the GRUU of the calling party, and then determines the address and route of the calling party according to the public user identity and the GRUU of the calling party.

Some IMS network entity (such as MGCF or AS) that may act as the UA may also be assigned with one GRUU in a SIP message to indicate the network entity itself. As for the network entity acting as the B2BUA, if a contact header of the called party includes a GRUU, a contact header of the calling party may also include a GRUU. The GRUU of identifying the network entity is either configured or reserved by the operator, or obtained through other ways.

Usually, the GRUU may be used to replace the IP address and used in session routing. The GRUU is different from the IP address in that, the IP address is permanently valid, and if the GRUU is not registered, the IMS network side cannot be routed to the user according to the GRUU.
A 3GPP standard TS 23.228 V7.2.0 provides identification of IMS communication service. A US patent 2004/153667 A1 provides a method for registering a communication terminal with a service network which organizes a communication service. A 3GPP technical report S2-052755 provides IMS impacts of GRUU.

### SUMMARY

Based on the above, when processing a user service, an IMS network side needs to validate a GRUU set by the user and currently carried in the service according to stored current validity information of the GRUU, and performs the service process according to the validity of the GRUU.

Accordingly, the present invention is directed to a method, an apparatus, and a system for validating a GRUU in an IMS, which are capable of validating the GRUU set by the user and carried in the service at an IMS network side.

According to the present invention, a method for validating a GRUU is provided, as described in claim 1.

According to the present invention, a system for validating a GRUU is provided, which includes an S-CSCF, as described in claim 10.

According to the present invention, an S-CSCF is provided, which includes a validating unit, as described in claim 9.

The validating unit is adapted to validate a GRUU contained in a service request or in a service response when receiving the service request or the service response containing the GRUU.

The present invention further provides a P-CSCF, which includes: a validating unit.

The validating unit is adapted to judging whether a public user identity extracted from the GRUU is identical to a public user identity contained in a service request or in a service response, or whether both of them are in the same implicit registration set; if the public user identity extracted from the GRUU is identical to a public user identity contained in the service request or in the service response, or both of them are in the same implicit registration set, the service request or the service response containing the GRUU is directly sent to the S-CSCF; if the public user identity extracted from the GRUU is not identical to a public user identity contained in the service request or in the service response, or both of them are in different implicit registration set, or the service request or the service response does not contain a public user identity, the P-CSCF replaces the public user identity in the service request or in the service response, or adds a public user identity, and then the service request or the service response with the added or replaced public user identity is sent to the S-CSCF.In the method, apparatus, and system provided in the present invention, the S-CSCF is used to validate the GRUU, so as to solve the problem about how the IMS network side validates the GRUU which is not defmed in the prior art.

### BRIEF DESCRIPTION OF THE DRAWINGS

Figure 1 is a simple flow chart of a method for validating a GRUU in an IMS according to Embodiment 1 of the present invention;

Figure 2 is a simple schematic view of a system for validating a GRUU in an IMS by an S-CSCF according to Embodiment 2 of the present invention;

Figure 3 is a simple flow chart of a method for validating a GRUU in an IMS by an S-CSCF according to Embodiment 2 of the present invention;

Figure 4 is a simple schematic view of a system for validating a GRUU in an IMS by a P-CSCF according to Embodiment 3 of the present invention;

Figure 5 is a simple flow chart of a method for validating a GRUU in an IMS by a P-CSCF according to Embodiment 3 of the present invention; and

Figure 6 is a simple flow chart of a method for validating a GRUU in an IMS by a user according to Embodiment 4 of the present invention.

### DETAILED DESCRIPTION OF THE EMBODIMENTS

In order to make the technical features and advantages of the present invention comprehensible, the present invention is further illustrated in the following embodiments with reference to the accompanied drawings.

Embodiment 1

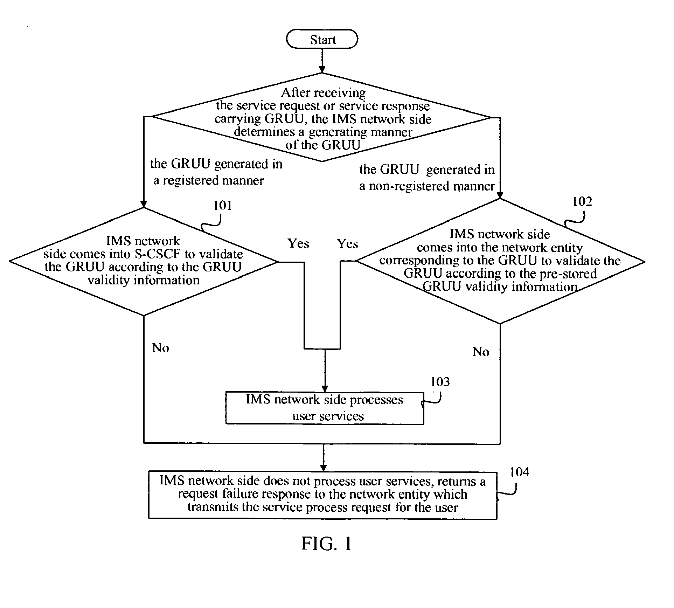

Figure 1 is a simple flow chart of a method for validating a GRUU in an IMS according to Embodiment 1 of the present invention, which includes the following steps.

In Step 100, after receiving a service process request or a service process response containing a GRUU sent to a user, an IMS network side determines the generating manner of the GRUU, and if it is determined that the GRUU is generated in a non-registered manner, it turns to Step 102; and if it is determined that the GRUU is generated in a registered manner, it turns to Step 101.

Since the GRUU may be generated in different manners, different methods are correspondingly employed for validating the GRUU.

The GRUU may be generated in the registered manner, and the GRUU generated in the registered manner is stored in an S-CSCF for user services. The S-CSCF further stores validity information for indicating whether the GRUU generated in the registered manner is currently valid. Generally, the user adopting the registered manner is a UE. The GRUU may also be generated in the non-registered manner, and the GRUU generated in the non-registered manner represents or indicates a network entity and is stored in the network entity. The network entity further stores validity information for indicating whether the GRUU generated in the non-registered manner is currently valid. Generally, the GRUU generated in the non-registered manner represents a network entity, such as AS, MGCF, and IBCF, or represents a service on the network entity, such as a public service identifier (PSI) on the AS. The network entity may act as a user agent (UA), and support the GRUU. The GRUU representing a network entity is usually a GRUU for identifying a session, which is reserved or set by an operator for the network entity (such as MGCF and IBCF) or assigned to the network entity in other ways, or generated by the network entity itself according to operator rules when originating the session.

When receiving the service process request or the service process response containing the GRUU sent by a user, the IMS network side determines the generating manner of the GRUU contained in the request or in the response, for example, by employing three manners. The three manners for determining the generating manner of the GRUU set by the user and contained in the request or in the response are illustrated below.

In the first manner, a field is set in user profile information (e.g. service profile) contained in a public user identity corresponding to the GRUU, which is adapted to indicate the generating manner of the GRUU corresponding to the public user identity. For example, the field may be set in a way that the GRUU is generated in the registered manner or the GRUU is generated in the non-registered manner. The field may be explicitly or implicitly set. The implicit setting is to indicate the type of the user, and the generating manner of the GRUU is determined according to the type of the user.

The IMS network side determines the generating manner of the GRUU contained in the request or in the response according to the field in the service profile contained in the public user identity corresponding to the GRUU contained in the request or in the response.

In the prior art, since the GRUU includes the public user identity corresponding to the GRUU according to preset rules, the public user identity corresponding to the GRUU may be determined based on the GRUU.

In the second manner, the generating manner of the GRUU is determined according to the type of the user. If the user is a UE, the GRUU is generated in a registered manner, and if the user is a PSI user or a network entity, the GRUU is generated in a non-registered manner. The IMS network side determines the generating manner of the GRUU contained in the request or in the response according to the type of the user who originates the request or the response, or according to whether the user is a network entity. For example, if the IMS network operator determines that a user identity of a certain PSI subdomain is a PSI user according to the configuration, the GRUU is generated in the non-registered manner. Furthermore, for example, whether the GRUU represents the network entity or not is judged based on an address conveyed in a contact header, and if the contact address is a contact address of the network entity instead of that of the UE, the GRUU is generated in the non-registered manner.

In the third manner, if a GRUU is set for the user or the network entity, the GRUU carries an identifier or a mark for indicating the generating manner or has a defaulted generating manner, so that the IMS network side determines the generating manner of the GRUU contained in the request or in the response directly according to the GRUU contained in the request or in the response.

When the IMS network side processes the user's services, such as a call processing, the IMS network side validates the GRUU carried in the call in different ways according to different generating manners of the GRUU carried in the call. If the GRUU carried in the call is generated in the registered manner, the IMS network side validates the GRUU carried in the call in the S-CSCF for user services, i.e. Step 101 is executed. If the GRUU carried in the call is generated in the non-registered manner, the IMS network side validates the GRUU carried in the call in the network entity corresponding to the GRUU, i.e. Step 102 is executed.

In Step 101, when the IMS network side determines that the GRUU contained in the service process request or in the service process response is generated in the registered manner, the IMS network side sends the request or the response to the S-CSCF for user services. The S-CSCF validates the GRUU contained in the request or in the response according to the GRUU validity information. The IMS network side judges whether the GRUU contained in the request or in the response is valid in the S-CSCF for user services according to the GRUU validity information, and if the IMS network side is determined that the GRUU is valid, Step 103 is executed; and otherwise, Step 104 is executed.

The GRUU validity information is pre-stored in the S-CSCF by the user during registration, or obtained by the S-CSCF from the GRUU validity information stored in an HSS. Since the GRUU validity information pre-stored in the S-CSCF or obtained from the HSS includes all the currently valid GRUUs generated in the registered manner, in this embodiment, the validity of the GRUU contained in the request or in the response may be determined based on whether the GRUU contained in the request or in the response is identical to one of the currently valid GRUUs, and if the GRUU contained in the request or in the response is identical to one of the currently valid GRUUs, the GRUU contained in the request or in the response is valid; otherwise, the GRUU contained in the request or in the response is invalid.

The process of storing the GRUU validity information in the HSS includes: the GRUU validity information assigned to the user is stored in the HSS, when the S-CSCF for user services assigns the GRUU to the user. According to the checking position, the process is classified into two manners: one is checking in the S-CSCF, and the other is checking in the HSS, and then returning a checking result to the S-CSCF by the HSS.

In Step 102, when the IMS network side determines that the user corresponding to the GRUU contained in the service process request or in the service process response is a PSI user or represents a network entity (such as AS, MGCF, and IBCF), the S-CSCF sends the request or the response to the corresponding network entity, and the corresponding network entity validates the GRUU contained in the request or in the response. The IMS network side judges whether the GRUU contained in the request or in the response is valid or not in the network entity (such as AS, MGCF, and IBCF) indicated or represented by the GRUU according to the stored GRUU validity information, and if the GRUU is valid, Step 103 is executed; and if the GRUU is invalid, Step 104 is executed.

The GRUU validity information pre-stored in the network entities (such as MGCF, IBCF, and AS) are all the currently valid GRUUs generated in the non-registered manner, and the currently valid GRUUs are reserved or set for the network entity by the operator, or generated for indicating a session when the network entity originates the session. Therefore, in this embodiment, it is judged whether the GRUU contained in the request or in the response represents the network entity, or whether the GRUU is reserved or set for the network entity by the operator, or whether the GRUU is generated when the network entity originates the session. If the GRUU dose not represent the network entity, or the GRUU is not reserved or set for the network entity by the operator, or the GRUU is not generated when the network entity originates the session, the GRUU is not validated any more. If the GRUU represents the network entity or the GRUU is reserved or set for the network entity by the operator, or the GRUU is generated when the network entity originates the session, the GRUU is validated by further judging whether the GRUU is identical to one of the currently valid GRUUs stored in the network entity. If the GRUU is identical to one of the currently valid GRUUs stored in the network entity, the GRUU contained in the request or in the response is valid; otherwise, the GRUU contained in the request or in the response is invalid.

For example, when the user corresponding to the GRUU contained in the request or in the response is a PSI user, the corresponding network entity is AS, and when the GRUU contained in the request or in the response represents the network entity MGCF, the corresponding network entity is MGCF.

When the validating of the GRUU contained in the service process request or in the service process response is in other network entities (such as AS, MGCF, and IBCF) or in the S-CSCF according to the GRUU validity information, the GRUU validity information indicates the currently valid GRUUs, and the above validating process includes: the GRUU contained in the request or in the response is judged whether identical to one of the currently valid GRUUs, and if the GRUU contained in the request or in the response is identical to one of the currently valid GRUUs, the GRUU is valid; otherwise, the GRUU is invalid.

In Step 103, the IMS network side processes user services.

In Step 104, the IMS network side does not process user services, but returns a request failure response to the network entity that sends the service process request to the user; or the IMS network side replaces the invalid GRUU by a valid GRUU, and executes the service process request or the service process response according to the updated valid GRUU; or the IMS network side replaces the invalid GRUU by an IP address pre-registered by the user, and executes the service process request or service process the according to the IP address pre-registered by the user. If the GRUU contained in Request-URI of the request message received by the S-CSCF at the call-terminating side is invalid, the S-CSCF may reject the call and gives a reason, or triggers a non-registered service of the GRUU according to an operator strategy, or triggers a non-registered service of the public user identity contained in the GRUU.

The basic flow for validating the GRUU in the IMS according to this embodiment has been described above.

If the Request-URI in the request message received by the S-CSCF at the call-terminating side includes the GRUU, before Step 101, i.e. before the S-CSCF validates the GRUU contained in the service process request, the process further includes the following steps. The IMS network side sends the request to an I-CSCF for services for a user, and then the I-CSCF validates the GRUU contained in the request. The I-CSCF inquires the HSS to judge whether the S-CSCF for user services exists, and if the S-CSCF exists, the request is sent to the determined S-CSCF, and then the determined S-CSCF validates the GRUU contained in the request; otherwise, the GRUU is invalid.

If a contact header in the request or in the response message sent by the user and received by the S-CSCF at a call-originating side includes GRUU, before Step 101, i.e. before the S-CSCF validates the GRUU contained in the service process request or in the service process response, the IMS network side sends the request or the response to a P-CSCF for services for a user, and then the P-CSCF judges whether to support the GRUU and store the GRUU validity information. If the P-CSCF determines to support the GRUU and store the GRUU validity information, the P-CSCF validates the GRUU contained in the request or in the response according to the GRUU validity information; otherwise, the S-CSCF validates the GRUU contained in the service process request or in the service process response. After the P-CSCF validates the GRUU contained in the request or in the response, the S-CSCF may further validate the GRUU contained in the service process request or in the service process response. The P-CSCF may also send the result of validating the GRUU contained in the request or in the response to the S-CSCF for the S-CSCF to make a reference when validating the GRUU contained in the service process request or in the service process response. The result of validating may be implicit, for example, if the S-CSCF receives the request or the response forwarded by the P-CSCF supporting the GRUU validating, it is defaulted that the GRUU is valid. Considering that the P-CSCF may support or not support the GRUU validating, the P-CSCF may carry a relevant header field in the request or in the response by means of subscription, so as to inform the S-CSCF about whether the P-CSCF supports the GRUU validating. Thus, the S-CSCF judges whether the GRUU contained in the request or in the response has been validated according to the record in the header of the request or the response about whether the relevant P-CSCF supports the GRUU validating.

If the contact header in the request or in the response message received by the S-CSCF at the call-originating side includes the GRUU information, when the P-CSCF receives the message, the P-CSCF may not only validate the GRUU contained in the request or in the response according to the GRUU validity information stored therein, but also further validate the GRUU contained in the request or in the response, if the service process request or in the service process response contains the public user identity of the user. Particularly, the P-CSCF compares a public user identity (e.g. P-preferred-identity) extracted from the GRUU contained in the request or in the response with the public user identity contained in the service process request or in the service process response to judge whether both of them are identical to each other or in the same implicit registration set. If both of them are identical to each other or in the same implicit registration set, the GRUU is valid; and otherwise, the GRUU is invalid. If the response or the request does not include a public user identity (e.g. P-preferred-identity) for originating a call, the P-CSCF extracts a public user identity from the GRUU information of the contact header in the received message to serve as the public user identity for originating a call, or acquire a default public user identity from the implicit registration set of the extracted public user identity and selects one public user identity from the implicit registration set at random as the public user identity for originating a call.

In this embodiment, when the IMS network side fails to determine the generating manner of the GRUU contained in the service process request or in the service process response based on the above three manners provided in the embodiment of the present invention, the IMS network side may send the request or the response to the S-CSCF for user services, and the S-CSCF validates the GRUU contained in the request or in the response according to the GRUU validity information. The GRUU validity information is obtained by the S-CSCF from the GRUU validity information stored in the HSS. Herein, the GRUU validity information stored in the HSS may be valid GRUUs preset for the user, and the S-CSCF judges whether the GRUU contained in the request or in the response is one of the valid GRUUs. If the GRUU is one of the valid GRUUs, the GRUU is valid; otherwise, the GRUU is invalid. The GRUU validity information stored in the HSS may also indicate the generating manner of the GRUU, e.g. indicate that the user corresponding to the GRUU is a UE user, a PSI user, or represents a network entity (such as AS, MGCF, and IBCF). When determining that the user corresponding to the GRUU contained in the request or in the response is a UE according to the GRUU validity information, the S-CSCF validates the GRUU by itself.

If the contact header in the service process request or in the service process response sent by the user conveys the public user identity of the user, the process further includes judging whether the public user identity in the GRUU contained in the request or in the response is identical to the public user identity contained in the request or in the response, and if the public user identity in the GRUU contained in the request or in the response is identical to the public user identity contained in the request or in the response, the GRUU is valid; otherwise, the GRUU is invalid. When the GRUU represents a network entity, this checking process may be omitted.

When the GRUU contained in the service process request or in the service process response sent by the user is valid, the IMS network side executes the request or the response.

If the GRUU contained in the service process request or in the service process response sent by the user is invalid, the IMS network side may reject the execution of the request or the response, and send a message for rejecting the execution of the request or the response to the user, in which the message contains a rejection reason. When the IMS network side detects that the GRUU contained in the request or in the response is determined to be invalid at both the call-originating side and the call-terminating side, the S-CSCF or other network entities may give different reason responses, so that the user judges the GRUU is determined to be invalid whether at this party or at the opposite party according to the reason responses. When the GRUU contained in the request or in the response is determined to be invalid, the IMS network side may replace the GRUU contained in the request or in the response by a valid GRUU stored in the IMS network side and execute the service process request or the service process response according to the valid GRUU. The IMS network side may replace the invalid GRUU contained in the request or in the response by the IP address pre-registered for the user, and may execute the service process request or the service process response according to the IP address pre-registered for the user. If the GRUU of the called party contained in the Request-URI of the request message received by the S-CSCF at the call-terminating side is valid, the S-CSCF may reject the call and gives a reason, or triggers a non-registered service of the GRUU according to an operator strategy, or triggers a non-registered service of the public user identity contained in the GRUU.

Embodiment 2

In this embodiment, the S-CSCF at the call-terminating side validates the GRUU of the called party.

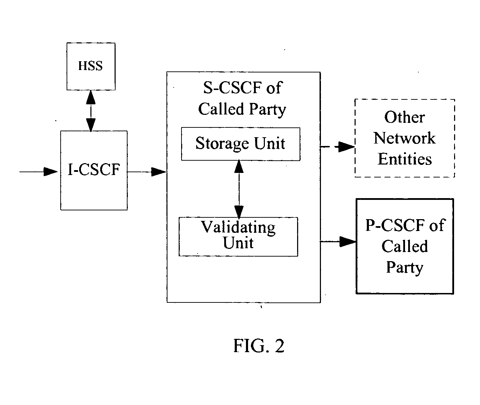

Figure 2 is a simple schematic view of a system for validating a GRUU in an IMS by an S-CSCF according to Embodiment 2 of the present invention. The system includes an S-CSCF. The S-CSCF includes a validating unit adapted to validate the GRUU contained in the received service request or in the service response. The S-CSCF further includes a storage unit adapted to store the GRUU validity information. The validating unit validates the GRUU contained in the received session request or session response according to the GRUU validity information stored in the storage unit.

The system in this embodiment further includes an I-CSCF and an HSS. The I-CSCF judges whether the S-CSCF at the call-terminating side exists according to S-CSCF information stored in the HSS when receiving the service request or the service response containing the GRUU, and sends the GRUU contained in the service request to the determined S-CSCF at the call-terminating side.

The HSS stores the S-CSCF information, and further stores the GRUU validity information.

If the GRUU is generated in the S-CSCF in a registered manner, when the GRUU is valid, the S-CSCF at the call-terminating side sends the service request or the response to the P-CSCF at the call-terminating side, and then connects with the user via the P-CSCF. If the GRUU indicates a network entity, when the GRUU is valid, the S-CSCF sends the service request or response to the network entity.

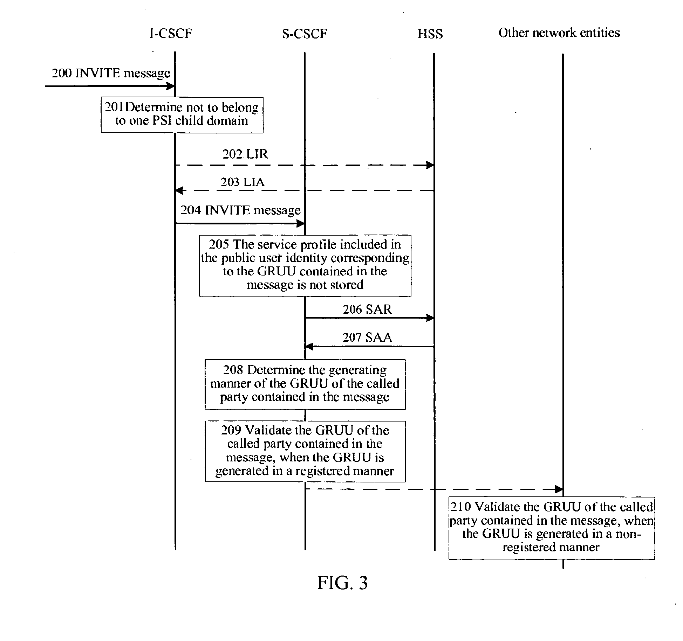

Figure 3 is a simple flow chart of a method for checking validity of GRUU in an IMS by an S-CSCF according to Embodiment 2 of the present invention, which specifically includes the following steps.

In Step 200, the I-CSCF receives an INVITE message sent by a calling party, and the message contains a URI and a GRUU of a called party.

In the prior art, the URI of the called party (as for the user, the URI is a public user identity) may be extracted from the GRUU of the called party.

In Step 201, the I-CSCF judges whether the URI contained in the INVITE message belongs to the same PSI subdomain. If the URI contained in the INVITE message belongs to the same PSI subdomain, the I-CSCF acquires an address of an application server AS according to a domain name information contained in the message (in a DNS manner), and directly sends the message to the AS. The AS executes the GRUU validity check, and Step 210 (not shown) is executed. If the URI contained in the INVITE message dose note belong to the same PSI subdomain, Step 202 is executed.

In the prior art, a mapping relation between the URI and the PSI subdomain is preset in the I-CSCF, so that it can judge whether the URI contained in the INVITE message belongs to the same PSI, i.e. whether the user is a PSI user, based on the mapping relation.

In this embodiment, the corresponding user may be recorded as a UE or PSI user when the URI is set, so that it is judged whether the corresponding user is the PSI user according to the record in the URI.

In Step 202, the I-CSCF determines the public user identity of the called party according to the GRUU of the called party contained in the message, and sends a user location information request (LIR) containing the public user identity of the called party to the HSS.

In Step 203, in response to the LIR, the HSS inquires a registration state of the called party according to the public user identity of the called party contained in the LIR, and returns a user location information answer (LIA) response message to the I-CSCF.

According to the prior art, if the called party having the public user identity contained in the LIR has registered an S-CSCF in the HSS, the LIA response message returned by the HSS contains S-CSCF information registered by the called party. If the called party having the public user identity contained in the LIR does not register an S-CSCF in the HSS and has no non-registered service, the LIA response message returned by the HSS contains a failure message, and the I-CSCF returns an unreachable message to the calling party that sends the INVITE message. If the called party having the public user identity contained in the LIR does not register an S-CSCF in the HSS but has a non-registered service, the HSS returns an S-CSCF capable of accomplishing the non-registered service or the user capability requirements for accomplishing the non-registered service to the I-CSCF, and the I-CSCF determines the S-CSCF for accomplishing the non-registered service or selects one S-CSCF according to the returned user capability requirements to accomplish the non-registered service. If the I-CSCF determines that the user is not a PSI user, or determines that the GRUU is generated in a registered manner by other means, the response message returned by the HSS includes service capability requirements for accomplishing the non-registered service, i.e., the public user identity is not registered, the I-CSCF needs to return an unreachable message to the calling party that sends the INVITE message.

In Step 204, the I-CSCF determines the S-CSCF for processing the INVITE message according to the returned LIA response message, and forwards the INVITE message to the S-CSCF.

In Step 205, after receiving the INVITE message, the S-CSCF judges whether a service profile included in the public user identity corresponding to the GRUU of the called party contained in the message is stored therein, and if the service profile included in the public user identity corresponding to the GRUU of the called party contained in the message is stored in the S-CSCF, Step 208 is executed; otherwise, Step 206 is executed (the process for storing the service profile included in the public user identity corresponding to the GRUU of the called party contained in the message is not shown).

In Step 206, the S-CSCF sends a server assignment request (SAR) containing the public user identity of the called party to the HSS.

In Step 207, upon receiving the SAR, the HSS sends a server assignment answer (SAA) containing the service profile included in the public user identity of the called party to the S-CSCF, and Step 208 is executed.

In the prior art, the service profile included in the public user identity of the user is stored in the HSS during the registration of the user.

In Step 208, the S-CSCF determines the generating manner of the GRUU according to whether the called party is a UE or not. If the GRUU is generated based on registration of UE by the S-CSCF, Step 209 is executed. If the GRUU is generated in a non-registered manner, no process is performed, and at this time, the request is generally forwarded to the relevant AS or other network entities, and thus Step 210 is executed.

In this embodiment, a field for indicating the generating manner of the GRUU of the called party is set in the service profile included in the public user identity corresponding to the GRUU of the called party, so as to determine the generating manner of the GRUU of the called party. Alternatively, the other two manners among the above three manners in the embodiment of the present invention may be used to determine the generating manner of the GRUU.

In Step 209, the S-CSCF validates the GRUU of the called party according to the GRUU validity information, and if the GRUU is valid, the INVITE message is executed, and the call is relayed to the called party; if the GRUU is invalid, the INVITE message is not executed, and the I-CSCF returns a failure message to the calling party, or triggers a non-registered subscription service of the GRUU according to an operator strategy, or triggers the non-registered service of the public user identity included in the GRUU, and this process ends.

In Step 210, the S-CSCF forwards the INVITE message to the AS or other network entities, and the AS or other network entities validates the GRUU of the called party according to the GRUU validity information stored therein, i.e. the GRUU is compared with a GRUU group corresponding to the public user identity extracted from the GRUU to judge whether the GRUU is included in the GRUU group, so as to judge whether the GRUU is validate. The result of the validating is returned to the S-CSCF, and the S-CSCF judges whether to execute the INVITE message according to the result. If the GRUU is valid, the INVITE message is executed, and the call is relayed to the called party; if the GRUU is invalid, the INVITE message is not executed, and the I-CSCF returns a failure response to the calling party.

When the IMS network side detects that the GRUU contained in the request or in the response is invalid in the call-originating side validating and the call-terminating side validating, the AS or the S-CSCF gives different reason responses, so that the user judges the GRUU is determined to be invalid whether at this party or at the opposite party according to the reason responses.

In this embodiment, the INVITE message is a session initiation protocol (SIP) message. Other SIP messages except for the INVITE message, such as a information message, may also be processed in the similar way.

Figure 3 shows an example of a method for validating a GRUU at the call-terminating side, and the method shown in FIG. 3 may also be employed at the call-originating side for validating the GRUU, but, in this case, the SIP message contains GRUU of the calling party, a contact header of the SIP message of the call or response originated by the user contains GRUU information.

When the user acts as the calling party, the GRUU validated by the S-CSCF at a call-originating side of the IMS network side may be the contact header contained in the service process request, and the S-CSCF at the call-originating side of the IMS network side may further judge whether a public user identity extracted from the GRUU is identical to a public user identity contained in the P-asserted-identity in the request.

When the user acts as the called party, the GRUU validated by the I-CSCF or S-CSCF at a call-terminating side of the IMS network side may be a Request-URI header contained in the service process request.

When the user acts as the called party, the GRUU validated by the S-CSCF at the call-terminating side of the IMS network side may also be the contact header contained in the service process response, and the S-CSCF further judges whether the public user identity extracted from the GRUU is identical to the public user identity contained in the P-asserted-identity in the response.

In this embodiment, the call received by the I-CSCF and the S-CSCF is originated by the UE. Actually, the call received by the S-CSCF may also be originated by the network entities such as AS, MGCF, BGCF, and IBCF representing the user, and the GRUU carried in the call represents the corresponding network entity. Under this circumstance, in Steps 205-208, after receiving the call, the S-CSCF determines the generating manner of the GRUU according to whether the GRUU in the call is the GRUU assigned to the UE by the S-CSCF, and if the GRUU in the call is the GRUU assigned to the UE by the S-CSCF, the GRUU is generated in the registered manner. Alternatively, the S-CSCF determines the generating manner of the GRUU according to whether the GRUU in the call is the GRUU reserved or assigned by the operator to a network entity, and if the GRUU in the call is the GRUU reserved or assigned by the operator to a network entity, the GRUU is generated in the non-registered manner. Alternatively, the GRUU is determined to be the GRUU assigned to the UE by the S-CSCF or the GRUU generated in the non-registered manner for representing the network entity through judging whether the GRUU is an UE or represents the network entity according to the name contained in the GRUU. The GRUU may include a domain name or address for representing the network entity.

If the GRUU represents or indicates the network entity, the GRUU is not generated based on the registration of the S-CSCF, i.e. the GRUU is generated in the non-registered manner, so that the S-CSCF omits the validating of the GRUU and sends the GRUU to the network entity corresponding to the GRUU, and then the network entity corresponding to the GRUU performs the validating. The validating for the GRUU performed by the network entity corresponding to the GRUU includes: validating the GRUU according to GRUU validity information stored in the network entity corresponding to the GRUU, e.g., according to whether the GRUU in the message is identical to one of the currently valid GRUUs stored in the corresponding network entity, and if the GRUU in the message is identical to one of the currently valid GRUUs, the GRUU is valid, otherwise, the GRUU is invalid.

When the user represented by the GRUU is not registered at the current S-CSCF, i.e., the user is not a service subscriber of the S-CSCF, for example, during a call forwarding, the GRUU of a new called party is a GRUU of another user, the S-CSCF does not validate the GRUU in the new Request-URI.

Embodiment 3

In this embodiment, the contact header in the service request or in the service response sent by the calling party carries GRUU, and the P-CSCF at the call-originating side participates in validating the GRUU of the calling party.

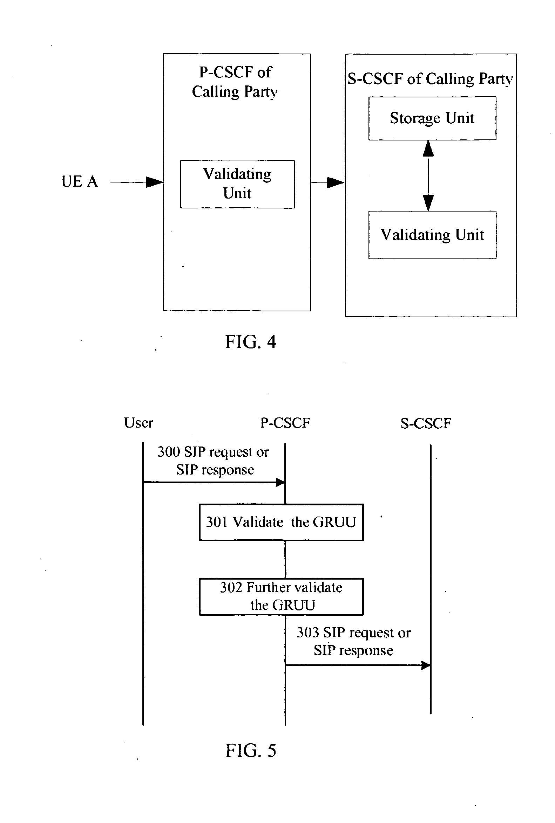

Figure 4 is a schematic view of a system for validating a GRUU in an IMS by a P-CSCF according to Embodiment 3 of the present invention. The system includes an S-CSCF. The S-CSCF includes a validating unit adapted to validate the received GRUU contained in the service request or in the service response. The S-CSCF further includes a storage unit adapted to store GRUU validity information. The validating unit may validate the GRUU contained in the received session request or in the received session response according to the GRUU validity information stored in the storage unit.

The system in this embodiment further includes a P-CSCF. The P-CSCF includes a validating unit adapted to judge whether the public user identity extracted from the GRUU contained in the received session request or in the received session response is identical to the public user identity contained in the session request or in the response or both of them belong to the same implicit registration set. If the public user identity extracted from the GRUU is identical to the public user identity or both of them belong to the same implicit registration set, the received session request or the received session response is directly forwarded to the S-CSCF; if the public user identity extracted from the GRUU is not identical to the public user identity or both of them don't belong to the same implicit registration set, or the session request or the session response does not include a public user identity (P-preferred-identity) for originating a call, the P-CSCF may extract a public user identity from the GRUU information conveyed in the contact header of the received message as the public user identity for originating a call, or acquire a default public user identity from the implicit registration set of the extracted public user identity, and select one public user identity from the implicit registration set at random as the public user identity for originating a call.

The P-CSCF further includes a storage unit adapted to store GRUU validity information, and the validating unit further validates the GRUU according to the GRUU validity information stored in the storage unit.

Figure 5 is a flow chart of a method for validating a GRUU in an IMS by a P-CSCF according to Embodiment 3 of the present invention, which specifically includes the following steps.

In Step 300, the user sends an SIP request or an SIP response to the P-CSCF for user services, and the request or the response contains a GRUU.

In Step 301, the P-CSCF matches the GRUU conveyed in the contact header of the request or the response with a GRUU group corresponding to the public user identity extracted from the GRUU, so as to judge whether the GRUU is included in the GRUU group, and if the GRUU is included in the GRUU group, the GRUU is valid.

The P-CSCF obtains the GRUU group corresponding to the public user identity through the registration process message or through subscription.

In Step 302, the P-CSCF further validate the GRUU, and compares the public user identity extracted from the GRUU with the public user identity in the P-preferred-identity header contained in the request or in the response. If the public user identity extracted from the GRUU is identical to the public user identity contained in the request or in the response or both of them belong to the same implicit registration set, the GRUU is valid, and the subsequent process is executed; otherwise, the GRUU is invalid.

If the GRUU is invalid, the request or the response message is not executed, and a failure response is returned to the user; or the P-CSCF replaces the invalid GRUU by a valid GRUU, and then executes the service process request or the service process response according to the updated valid GRUU; or the P-CSCF replaces the invalid GRUU by an IP address pre-registered by the user, and then executes the service process request or the service process response according to the IP address pre-registered by the user.

The public user identity contained in the request or in the response is contained in the P-asserted-identity header, which may be obtained according to the prior art.

In the prior art, under some uncertain circumstances, as for the P-asserted-identity in the service process request or in the service process response, one public user identity may be selected at random. If the request or the response contains a GRUU, the P-asserted-identity is determined according to the GRUU, which is illustrated below in detail.

In the current flow, if the P-preferred-identity contained in the request originated at the call-originating side of the IMS network side is not registered or does not contain a header field, the P-CSCF selects one public user identity from all the possible default public user identities at random as the identity for the user, i.e., P-asserted-identity. In the embodiment of the present invention, the flow may be amended as follows. The P-CSCF first judges whether the public user identity extracted from the GRUU is in an implicit registration set recorded and registered in the P-CSCF, and if the public user identity extracted from the GRUU is in an implicit registration set recorded and registered in the P-CSCF, the public user identity is taken as the P-asserted-identity, or one public user identity is selected from the implicit registration set at random, or the default public user identity of the implicit registration set is selected as the P-asserted-identity; otherwise, it is executed based on the current standard flow.

In Step 303, the P-CSCF sends the SIP request or SIP response to the S-CSCF, and the SIP request or SIP response may carry a validity check result of the GRUU for the S-CSCF to make a reference during the validity check.

The method shown in FIG. 5 requires that the P-CSCF supports the GRUU function. Considering that the user may enter a roaming state, the GRUU is a newly added feature, and in this way, not all the P-CSCFs support the GRUU function and execute relevant GRUU validating. Therefore, the S-CSCF may validate the GRUU on all the SIP requests or the SIP responses including those have already been validated by the P-CSCF. Obviously, the embodiment of the present invention may also optimize the situation about whether the S-CSCF is required to validate the GRUU. That is, the P-CSCF asserts the support of the GRUU function when originating the user registration information to the S-CSCF, and the S-CSCF records such information. Then, if the S-CSCF finds out the SIP request or the SIP response sent from the P-CSCF, it is assumed that the P-CSCF has already validated the GRUU, so that the validating unit of the S-CSCF directly determines that the GRUU is valid.

Figure 5 merely shows the procedures for validating the GRUU by the P-CSCF. After finishing the validating, the P-CSCF sends the service request or the service response to the S-CSCF, and the method for validating the GRUU contained in the service request or in the service response by the S-CSCF is the same as that for validating the GRUU by the S-CSCF as illustrated in Embodiment 2, which thus is not repeated here in detail.

According to the embodiment of the present invention, other network entities such as AS and MGCF may also act as the UA to represent the user to originate a call. At this time, without being processed by the P-CSCF, the call is directly forwarded to the S-CSCF at call-originating side by the network entities such as AS or MGCF. When determining that the GRUU contained in the call is not generated based on the registration of the UE, the S-CSCF at the call-originating side directly determines that the GRUU is valid. If the called party is a network entity such as AS or MGCF, and the S-CSCF determines that the GRUU contained in the call corresponds to the network entity, the S-CSCF determines that the GRUU is valid or omits the validating, and directly forwards the call to the network entity corresponding to the GRUU. Then, the network entity corresponding to the GRUU validates the GRUU according to the GRUU validity information stored therein.

Embodiment 4

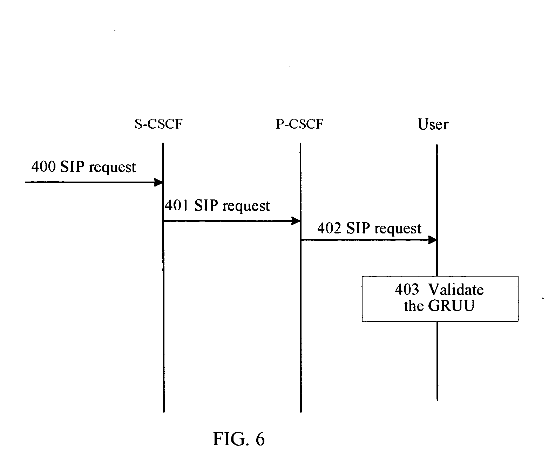

Figure 6 is a flow chart of a method for checking validity of GRUU in an IMS by a user according to Embodiment 4 of the present invention. In this embodiment, assuming that neither the P-CSCF nor the S-CSCF supports the GRUU validity check, the involved network entities include the P-CSCF, the S-CSCF, and the user in the IMS. The detailed procedures are illustrated below.

In Step 400, after receiving the SIP request containing the GRUU in the Request-URI, the S-CSCF that does not support the GRUU validating extracts the public user identity from the GRUU, but omits the other parts of the GRUU contained in the SIP request. According to the current standard, the S-CSCF may convert the URI in the Request-URI in a form of GRUU into a P-called-party-ID, and then forwards the SIP message.

In Step 401, the S-CSCF sends the SIP request to the P-CSCF according to the public user identity. Since the P-CSCF does not support the GRUU validating or does not store GRUU validity information, the P-CSCF omits the GRUU contained in the P-called-party-ID in the SIP request.

If the P-CSCF supports the GRUU validating and stores the GRUU validity information, the GRUU in the P-called-party-ID is validated with reference to the above embodiments.

In Step 402, the P-CSCF sends the SIP request to the user.

In Step 403, the user who receives the SIP request supports the GRUU, but cannot register a valid GRUU. When it is detected that the P-called-party-ID in the SIP request contains the GRUU, the GRUU is determined to be invalid, the SIP request is rejected, and a rejection response contained a rejection reason is returned to the P-CSCF.

Based on the above solutions, in the embodiments of the present invention, according to different generating manners of the GRUU set by the user, different network entities in the IMS are adopted to validate. When the GRUU set by the user and contained in the service process request or in the service process response send by the user is generated in the registered manner or the generating manner thereof cannot be determined, the GRUU contained in the request or in the response is validated at the S-CSCF or at the P-CSCF for user services. When the GRUU set by the user and contained in the service process request or in the service process response send by the user is generated in the non-registered manner, the GRUU contained in the request or in the response is validated at the network entity (such as AS, MGCF, and IBCF) indicated or represented by the GRUU. Therefore, the method and system provided in the embodiments of the present invention can achieve the validating for the GRUU contained in the service request or in the service response at the IMS network side.

Although preferred embodiments are disclosed herein, many variations are possible which remain within the scope of the invention, and these variations would become clear to those skilled in the art after perusal of this application.

## Claims

1. A method for validating an identifier, the method comprises:
receiving, by a serving-call session control function entity, S-CSCF, from network side of an internet protocol multimedia subsystem, IMS, a service request or a service response containing a globally-routable agent uniform resource identifier, GRUU, wherein the GRUU is generated in a registered manner (208); and
validating, by the S-CSCF, the GRUU according to GRUU validity information (209);
wherein the GRUU validity information is the currently valid GRUUs and the GRUU validity information is stored in the S-CSCF by a user during registration, or obtained, by the S-CSCF, from a home subscriber server, HSS (206, 207);
wherein the step of validating comprises: judging, by the S-CSCF, whether the GRUU is identical to one of the currently valid GRUUs (101):

2. The method according to claim 1, wherein the S-CSCF is an S-CSCF of originating side; and
validating, by the S-CSCF, the GRUU conveyed in a contact header of the service request or service response.

3. The method according to claim 1, wherein the S-CSCF is an S-CSCF of terminating side; and validating, by the S-CSCF, the GRUU conveyed in a request-URI header of the service request or service response.

4. The method according to claim 3, wherein if the S-CSCF fails to validate the GRUU, the S-CSCF rejects call, or triggers non-registered service of the GRUU according to operator strategy, or triggers non-registered service of a public user identity contained in the GRUU.

5. The method according to claim 1, wherein the method further comprises:
if the GRUU is identical to one of the currently valid GRUUs, the GRUU is valid;
if the GRUU is identical to none of the currently valid GRUUs, the GRUU is invalid.

6. The method according to claim 2, wherein before the step of validating, the method further comprises:
receiving, by a proxy-call session control function entity, P-CSCF from the IMS network side, the service request or the service response containing the GRUU; and
judging, by the P-CSCF, whether a public user identity extracted from the GRUU and a public user identity contained in the service request or in the service response are the same or in the same implicit registration set;
if the public user identity extracted from the GRUU and the public user identity contained in the service request or in the service response are the same or in the same implicit registration set, the service request or the service response is directly sent to the S-CSCF; and
if the public user identity extracted from the GRUU and the public user identity contained in the service request or in the service response are different or in different implicit registration set, the P-CSCF replaces the public user identity in the service request or in the service response; or the service request or the service response does not contain the public user identity, the P-CSCF adds a public user identity; and the service request or the service response is sent to the S-CSCF.

7. The method according to claim 3, wherein before the step of validating, the method further comprises:
sending, by the IMS network side, the service request or the service response to an inquiry-call session control function entity, I-CSCF;
inquiring, by the I-CSCF, the HSS to judge whether the S-CSCF for user services exists, if the S-CSCF for user services exists, the S-CSCF for user services validates the GRUU.

8. The method according to claim 1, 2, 3, 6, or 7, further comprising:
if the GRUU is valid, executing, by the IMS network side, the service request or the service response;
if the GRUU is invalid, rejecting, by the IMS network side, the service request or the service response, and sending a failure message with to the user; or replacing, by the IMS network side, the GRUU with a valid GRUU, and executing the service request or the service response according to the valid GRUU; or replacing, by the IMS network side, the GRUU with an IP address registered by the user, and executing the service request or the service response according to the IP address.

9. A serving-call session control function entity, S-CSCF, the S-CSCF comprises:
a receiving means, adapted to receive a service request or a service response containing a GRUU, wherein the GRUU is generated in a registered manner (208);
a validating means, adapted to validate the GRUU (209); and
a storage means, adapted to store GRUU validity information, wherein the GRUU validity information is the currently valid GRUUs and the GRUU validity information is stored in the S-CSCF by a user during registration or obtained from a home subscriber server, HSS (206, 207);
wherein the validating means is adapted to validate the GRUU b judging whether the GRUU is identical to one of the currently valid GRUUs (101).

10. A system for validating an identifier, the system comprises: a S-CSCF according to claim 9.

11. The system according to claim 10, further comprising:
a home subscriber server, HSS, adapted to store S-CSCF information; and
an inquiry-call session control function entity, I-CSCF, adapted to determine the S-CSCF, according to the S-CSCF information stored by the HSS when receiving the service request or the service response containing the GRUU, and send the GRUU.

12. The system according to claim 10, further comprising:
a proxy-call session control function entity, P-CSCF, adapted to judge whether a public user identity extracted from the GRUU and a public user identity contained in the service request or in the service response are the same or in the same implicit registration set, wherein
if the public user identity extracted from the GRUU and the public user identity contained in the service request or in the service response are the same or in the same implicit registration set, the service request or the service response containing the GRUU is directly sent to the S-CSCF; and
if the public user identity extracted from the GRUU and the public user identity contained in the service request or in the service response are different or in the different implicit registration set, the P-CSCF replaces the public user identity in the service request or in the service response; or the service request or the service response does not contain a public user identity, the P-CSCF adds a public user identity, and the service request or the service response is sent to the S-CSCF.

## Patentansprüche

1. Verfahren zum Validieren einer Kennung, mit den folgenden Schritten:
Empfangen einer Dienstanforderung oder einer Dienstantwort, die einen global routbaren Uniform Resource Identifier des Agenten GRUU enthält, durch eine Entität der Serving-Call Session Control Function S-CSCF von der Netzwerkseite eines Internet Protocol Multimedia Subsystem IMS, wobei der GRUU auf registrierte Weise erzeugt wird (208); und
Validieren des GRUU durch die S-CSCF gemäß GRUU-Gültigkeitsinformationen (209);
wobei die GRUU-Gültigkeitsinformationen die derzeit gültigen GRUU sind und die GRUU-Gültigkeitsinformationen durch einen Benutzer während der Registration in der S-CSCF gespeichert werden oder durch die S-CSCF von einem Home Subscriber Server HSS erhalten werden (206, 207);
wobei der Schritt des Validierens Folgendes umfasst: Beurteilen durch die S-CSCF, ob der GRUU mit einem der derzeit gültigen GRUU identisch ist (101).

2. Verfahren nach Anspruch 1, wobei die S-CSCF eine S-CSCF der Ursprungsseite ist;
und
die S-CSCF den in einem Kontakt-Header der Dienstanforderung oder Dienstantwort beförderten GRUU validiert.

3. Verfahren nach Anspruch 1, wobei die S-CSCF eine S-CSCF der Abschlussseite ist; und die S-CSCF den in einem Anforderungs-URI-Header der Dienstanforderung oder Dienstantwort beförderten GRUU validiert.

4. Verfahren nach Anspruch 3, wobei, wenn die S-CSCF den GRUU nicht validieren kann, die S-CSCF den Anruf zurückweist oder nicht registrierten Dienst des GRUU gemäß Betreiberstrategie triggert oder nicht registrierten Dienst einer in dem GRUU enthaltenen öffentlichen Benutzeridentität triggert.

5. Verfahren nach Anspruch 1, wobei das Verfahren ferner Folgendes umfasst:
wenn der GRUU mit einem der derzeit gültigen GRUU identisch ist, ist der GRUU gültig;
wenn der GRUU mit keinem der derzeit gültigen GRUU identisch ist, ist der GRUU ungültig.

6. Verfahren nach Anspruch 2, wobei das Verfahren vor dem Schritt des Validierens ferner Folgendes umfasst:
Empfangen der Dienstanforderung oder der Dienstantwort, die den GRUU enthält, durch eine Entität der Proxy-Call Session Control Function P-CSCF von der IMS-Netzwerkseite; und
Beurteilen durch die P-CSCF, ob eine aus dem GRUU extrahierte öffentliche Benutzeridentität und eine in der Dienstanforderung oder in der Dienstantwort enthaltene öffentliche Benutzeridentität gleich sind oder sich in derselben impliziten Registrationsmenge befinden;
wenn die aus dem GRUU extrahierte öffentliche Benutzeridentität und die in der Dienstanforderung oder in der Dienstantwort enthaltene öffentliche Benutzeridentität gleich sind oder sich in derselben impliziten Registrationsmenge befinden, wird die Dienstanforderung oder die Dienstantwort direkt zu der S-CSCF gesendet; und
wenn die aus dem GRUU extrahierte öffentliche Benutzeridentität und die in der Dienstanforderung oder in der Dienstantwort enthaltene öffentliche Benutzeridentität verschieden sind oder sich in einer verschiedenen impliziten Registrationsmenge befinden, ersetzt die P-CSCF die öffentliche Benutzeridentität in der Dienstanforderung oder in der Dienstantwort; oder wenn die Dienstanforderung oder die Dienstantwort die öffentliche Benutzeridentität nicht enthält, fügt die P-CSCF eine öffentliche Benutzeridentität hinzu; und die Dienstanforderung oder die Dienstantwort wird zu der S-CSCF gesendet.

7. Verfahren nach Anspruch 3, wobei das Verfahren vor dem Schritt des Validierens ferner Folgendes umfasst:
Senden der Dienstanforderung oder der Dienstantwort durch die IMS-Netzwerkseite zu einer Entität der Inquiry-Call Session Control Function I-CSCF;
Anfragen durch die I-CSCF bei dem HSS, um zu beurteilen, ob die S-CSCF für Benutzerdienste existiert; wenn die S-CSCF für Benutzerdienste existiert, validiert die S-CSCF für Benutzerdienste den GRUU.

8. Verfahren nach Anspruch 1, 2, 3, 6 oder 7, ferner mit den folgenden Schritten:
wenn der GRUU gültig ist, Ausführen der Dienstanforderung oder der Dienstantwort durch die IMS-Netzwerkseite;
wenn der GRUU ungültig ist, Zurückweisen der Dienstanforderung oder der Dienstantwort durch die IMS-Netzwerkseite und Senden einer Misserfolgsnachricht zu dem Benutzer; oder Ersetzen des GRUU mit einem gültigen GRUU durch die IMS-Netzwerkseite und Ausführen der Dienstanforderung oder der Dienstantwort gemäß dem gültigen GRUU; oder Ersetzen des GRUU mit einer durch den Benutzer registrierten IP-Adresse durch die IMS-Netzwerkseite und Ausführen der Dienstanforderung oder der Dienstantwort gemäß der IP-Adresse.

9. Entität der Serving-Call Session Control Function S-CSCF, wobei die S-CSCF Folgendes umfasst:
ein Empfangsmittel, das dafür ausgelegt ist, eine Dienstanforderung oder eine Dienstantwort zu empfangen, die einen GRUU enthält, wobei der GRUU auf registrierte Weise erzeugt wird (208);
ein Validierungsmittel, das dafür ausgelegt ist, den GRUU zu validieren (209); und
ein Speichermittel, das dafür ausgelegt ist, GRUU-Gültigkeitsinformationen zu speichern, wobei die GRUU-Gültigkeitsinformationen die derzeit gültigen GRUU sind und die GRUU-Gültigkeitsinformationen durch einen Benutzer während der Registration in der S-CSCF gespeichert werden oder aus einem Home Subscriber Server HSS erhalten werden (206, 207);
wobei das Validierungsmittel dafür ausgelegt ist, den GRUU zu validieren, indem beurteilt wird, ob der GRUU mit einem der derzeit gültigen GRUU identisch ist (101).

10. System zum Validieren einer Kennung, wobei das System Folgendes umfasst: eine S-CSCF nach Anspruch 9.

11. System nach Anspruch 10, ferner umfassend:
einen Home Subscriber Server HSS, der dafür ausgelegt ist, S-CSCF-Informationen zu speichern; und
eine Entität der Inquiry-Call Session Control Function I-CSCF, die dafür ausgelegt ist, die S-CSCF gemäß den durch den HSS beim Empfangen der Dienstanforderung oder der Dienstantwort, die den GRUU enthält, gespeicherten S-CSCF-Informationen zu bestimmen und den GRUU zu senden.

12. System nach Anspruch 10, ferner umfassend:
eine Entität der Proxy-Call Session Control Function P-CSCF, die dafür ausgelegt ist, zu beurteilen, ob eine aus dem GRUU extrahierte öffentliche Benutzeridentität und
eine in der Dienstanforderung oder in der Dienstantwort enthaltene öffentliche Benutzeridentität gleich sind oder sich in derselben impliziten Registrationsmenge befinden, wobei
wenn die aus dem GRUU extrahierte öffentliche Benutzeridentität und die in der Dienstanforderung oder der Dienstantwort enthaltene öffentliche Benutzeridentität gleich sind oder sich in derselben impliziten Registrationsmenge befinden, wird die Dienstanforderung oder die Dienstantwort, die den GRUU enthält, direkt zu der S-CSCF gesendet; und
wenn die aus dem GRUU extrahierte öffentliche Benutzeridentität und die in der Dienstanforderung oder in der Dienstantwort enthaltene öffentliche Benutzeridentität verschieden sind oder sich in der verschiedenen impliziten Registrationsmenge befinden, ersetzt die P-CSCF die öffentliche Benutzeridentität in der Dienstanforderung oder in der Dienstantwort; oder wenn die Dienstanforderung oder die Dienstantwort keine öffentliche Benutzeridentität enthält, fügt die P-CSCF eine öffentliche Benutzeridentität hinzu und die Dienstanforderung oder die Dienstantwort wird zu der S-CSCF gesendet.

## Revendications

1. Procédé permettant de valider un identificateur, le procédé comprenant :
la réception, par une entité fonctionnelle de commande de session d'appel de desserte, S-CSCF, à partir du côté réseau d'un sous-système multimédia au protocole Internet, IMS, d'une demande de service ou d'une réponse de service contenant un identificateur de ressource uniforme d'agent routable mondialement, GRUU, dans lequel l'identificateur GRUU est généré de manière enregistrée (208),
et
la validation, par la fonction S-CSCF, de l'identificateur GRUU en fonction des informations sur la validité de l'identificateur GRUU (209),
dans lequel les informations sur la validité de l'identificateur GRUU représentent les identificateurs GRUU actuellement valides, et les informations sur la validité de l'identificateur GRUU sont mémorisées dans la fonction S-CSCF par un utilisateur pendant le référencement, ou bien sont obtenues, par la fonction S-CSCF, à partir d'un serveur d'abonnés domestiques, HSS (206, 207),
dans lequel l'étape de validation comprend : le fait d'évaluer, par la fonction S-CSCF, si l'identificateur GRUU est identique à l'un des identificateurs GRUU actuellement valides (101).

2. Procédé selon la revendication 1, dans lequel la fonction S-CSCF est une fonction S-CSCF du côté d'origine, et
l'identificateur GRUU transporté dans un en-tête de contact de la demande de service ou de la réponse de service est validé par la fonction S-CSCF.

3. Procédé selon la revendication 1, dans lequel la fonction S-CSCF est une fonction S-CSCF du côté terminal, et l'identificateur GRUU transporté dans un en-tête d'identificateur URI (Identificateur Universel de Ressource) de requête de la demande de service ou de la réponse de service est validé par la fonction S-CSCF.

4. Procédé selon la revendication 3, dans lequel, si la fonction S-CSCF échoue à valider l'identificateur GRUU, la fonction S-CSCF rejette l'appel ou déclenche un service non enregistré de l'identificateur GRUU en fonction de la stratégie de l'opérateur, ou bien elle déclenche le service non enregistré de l'identité d'utilisateur public contenue dans l'identificateur GRUU.

5. Procédé selon la revendication 1, dans lequel le procédé comprend en outre :
la validation de l'identificateur GRUU si l'identificateur GRUU est identique à l'un des identificateurs GRUU actuellement valides,
l'invalidation de l'identificateur GRUU si l'identificateur GRUU n'est identique à aucun des identificateurs GRUU actuellement valides.

6. Procédé selon la revendication 2, dans lequel, avant l'étape de validation, le procédé comprend en outre :
la réception, par une entité fonctionnelle de commande de session d'appel de serveur mandataire, P-CSCF, à partir du côté réseau du sous-système IMS, de la demande de service ou de la réponse de service contenant l'identificateur GRUU, et
le fait d'évaluer, par la fonction P-CSCF, si une identité d'utilisateur public extraite de l'identificateur GRUU et si une identité d'utilisateur public contenue dans la demande de service ou dans la réponse de service sont identiques ou dans le même jeu implicite de référencements,
l'envoi direct de la demande de service ou de la réponse de service à la fonction S-CSCF si l'identité d'utilisateur public extraite de l'identificateur GRUU et l'identité d'utilisateur public contenue dans la demande de service ou dans la réponse de service sont identiques ou dans le même jeu implicite de référencements, et
le remplacement de l'identité d'utilisateur public, par la fonction P-CSCF, dans la demande de service ou dans la réponse de service si l'identité d'utilisateur public extraite de l'identificateur GRUU et l'identité d'utilisateur public contenue dans la demande de service ou dans la réponse de service sont différentes ou dans un jeu implicite de référencements différent ; ou bien l'ajout, par la fonction P-CSCF, d'une identité d'utilisateur public si la demande de service ou la réponse de service ne contient pas l'identité d'utilisateur public ; et l'envoi, à la fonction S-CSCF, de la demande de service ou de la réponse de service.

7. Procédé selon la revendication 3, dans lequel, avant l'étape de validation, le procédé comprend en outre :
l'envoi, par le côté réseau du sous-système IMS, de la demande de service ou de la réponse de service à l'entité fonctionnelle de commande de section d'appel de recherche, I-CSCF,
l'interrogation, par la fonction I-CSCF, du serveur HSS pour évaluer si la fonction S-CSCF pour des services utilisateur existe, et si la fonction S-CSCF pour des services utilisateur existe, la validation par la fonction S-CSCF pour des services utilisateur de l'identificateur GRUU.

8. Procédé selon la revendication 1, 2, 3, 6 ou 7, comprenant en outre :
l'exécution, par le côté réseau du sous-système IMS, de la demande de service ou de la réponse de service, si l'identificateur GRUU est valide,
le rejet, par le côté réseau du sous-système IMS, de la demande de service ou de la réponse de service, si l'identificateur GRUU est invalide, et l'envoi d'un message d'échec à l'utilisateur ; ou bien le remplacement, par le côté réseau du sous-système IMS, de l'identificateur GRUU par un identificateur GRUU valide, et l'exécution de la demande de service ou de la réponse de service en fonction de l'identificateur GRUU valide ; ou bien le remplacement, par le côté réseau du sous-système IMS, de l'identificateur GRUU par une adresse au protocole IP enregistrée par l'utilisateur et l'exécution de la demande de service ou de la réponse de service en fonction de l'adresse au protocole IP.

9. Entité fonctionnelle de commande de session d'appel de desserte, S-CSCF, la fonction S-CSCF comprenant :
un moyen de réception, conçu pour recevoir une demande de service ou une réponse de service contenant un identificateur GRUU, l'identificateur GRUU étant généré de manière enregistrée (208),
un moyen de validation, conçu pour valider l'identificateur GRUU (209) et
un moyen de mémorisation, conçu pour mémoriser les informations sur la validité de l'identificateur GRUU, dans lequel les informations sur la validité de l'identificateur GRUU représentent les identificateurs GRUU actuellement valides, et les informations sur la validité de l'identificateur GRUU sont mémorisées dans la fonction S-CSCF par un utilisateur pendant le référencement ou bien obtenues à partir d'un serveur d'abonnés domestiques, HSS (206, 207),
dans laquelle le moyen de validation est conçu pour valider l'identificateur GRUU en évaluant si l'identificateur GRUU est identique à l'un des identificateurs GRUU actuellement valides (101).

10. Système permettant de valider un identificateur, le système comprenant : une fonction S-CSCF selon la revendication 9.

11. Système selon la revendication 10, comprenant en outre :
un serveur d'abonnés domestiques, HSS, conçu pour mémoriser des informations sur une fonction S-CSCF, et
une entité fonctionnelle de commande de session d'appel de recherche, I-CSCF, conçue pour déterminer la fonction S-CSCF en fonction des informations sur la fonction S-CSCF mémorisées par le serveur HSS lors de la réception de la demande de service ou de la réponse de service contenant l'identificateur GRUU, et conçue pour envoyer l'identificateur GRUU.

12. Système selon la revendication 10, comprenant en outre :
une entité fonctionnelle de commande de session d'appel de serveur mandataire, P-CSCF, conçue pour évaluer si une identité d'utilisateur public extraite de l'identificateur GRUU et une identité d'utilisateur public contenue dans la demande de service ou dans la réponse de service sont identiques ou dans le même jeu implicite de référencements, dans lequel
si l'identité d'utilisateur public extraite de l'identificateur GRUU et l'identité d'utilisateur public contenue dans la demande de service ou dans la réponse de service sont identiques ou dans le même jeu implicite de référencements, la demande de service ou la réponse de service contenant l'identificateur GRUU est envoyée directement à la fonction S-CSCF, et
si l'identité d'utilisateur public extraite de l'identificateur GRUU et l'identité d'utilisateur public contenue dans la demande de service ou dans la réponse de service sont différentes ou dans un jeu implicite de référencements différent, la fonction P-CSCF remplace l'identité d'utilisateur public dans la demande de service ou dans la réponse de service ; ou bien si la demande de service ou la réponse de service ne contient pas d'identité d'utilisateur public, la fonction P-CSCF ajoute une identité d'utilisateur public et la demande de service ou la réponse de service est envoyée à la fonction S-CSCF.
